# EUROPEAN PATENT SPECIFICATION

(11) **EP 4 383 427 B1**
(45) Date of publication and mention of the grant of the patent: **26.08.2026**
(21) Application number: 22904603.2
(22) Date of filing: 05.12.2022
(51) Int. Cl.: H01M 50/256, H01M 50/247, H01M 50/249, H01M 10/04, H01M 10/613, H01M 10/6555, H01M 10/6557, F28D 1/03, H01M 10/052, H01M 10/625, H01M 50/264, H01M 50/213, H01M 10/643

(54) **ASSEMBLING SYSTEM AND METHOD FOR BATTERY MODULE ASSEMBLY**
MONTAGESYSTEM UND VERFAHREN FÜR BATTERIEMODULBAUGRUPPE
SYSTÈME ET PROCÉDÉ D'ASSEMBLAGE POUR ENSEMBLE MODULE DE BATTERIE

(30) Priority: 07.12.2021 KR 20210174261; 27.12.2021 KR 20210189013
(43) Date of publication of application: 12.06.2024
(73) Proprietor: LG Energy Solution, Ltd., Seoul 07335 (KR)
(72) Inventor: PARK, Geon-Tae, Daejeon 34122 (KR); PARK, Hyeong-Min, Daejeon 34122 (KR); LEE, Suk-Hoon, Daejeon 34122 (KR); KANG, Choon-Kwon, Daejeon 34122 (KR); JI, Hyun-Jin, Daejeon 34122 (KR); CHOI, Jee-Hoon, Daejeon 34122 (KR); KIM, Seong-Ho, Daejeon 34122 (KR)
(74) Representative: Plasseraud IP
(86) International application number: PCT/KR2022/019638
(87) International publication number: WO 2023/106773

(56) References cited:
- KR-A- 20040 026 543
- KR-A- 20170 062 901
- KR-A- 20170 071 077
- KR-A- 20170 071 077
- KR-A- 20190 124 544
- KR-B1- 100 388 648
- KR-B1- 102 193 318
- KR-B1- 102 193 318
- US-A1- 2004 069 620
- US-A1- 2020 243 928

## Description

### TECHNICAL FIELD

The present disclosure relates to an assembling system and method for a battery module assembly.

The present application claims priority to Korean Patent Application No. 10-2021-0174261 filed on December 7, 2021 and Korean Patent Application No. 10-2021-0189013 filed on December 27, 2021 in the Republic of Korea.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack is general.

A conventional battery module is generally configured to include a plurality of battery cells and a cell frame accommodating the plurality of battery cells. A conventional cell frame is generally composed of an assembly of a plurality of plates such as a front plate, a rear plate, a side plate, a lower plate, and an upper plate to accommodate the plurality of battery cells and secure rigidity.

However, the conventional battery module is disadvantageous in terms of cost competitiveness and manufacturing efficiency since manufacturing cost increases and the assembly process is complicated due to the characteristics of a cell frame structure composed of an assembly of a plurality of plates.

In addition, the conventional battery module is disadvantageous in terms of energy density since the size of the entire battery module is increased according to the cell frame structure composed of an assembly of a plurality of plates.

Therefore, when manufacturing a battery module or a battery pack, a method for implementing a frameless structure instead of such a cell frame structure is requested. Examples of background art can be found in KR 2017 0071077 A, KR 102 193 318 B1, KR 2004 0026543A, US 2004/069620 A1 and US 2020/243928 A1.

### DISCLOSURE

### Technical Problem

The present disclosure is directed to providing an assembling system and method for a battery module assembly, which may implement a frameless structure.

In addition, the present disclosure is directed to providing an assembling system and method for a battery module assembly, which may reduce manufacturing cost and minimizing an assembly space.

However, the technical problem to be solved by the present disclosure is not limited to the above-mentioned problem, and other problems not mentioned will be clearly understood by those skilled in the art from the present disclosure described below.

### Technical Solution

In the present invention, there is provided an assembling system for a battery module assembly, comprising: a first transfer device configured to transfer a plurality of battery cells in two rows; an aligning device configured to assemble a cell assembly by aligning a cooling unit between the two rows of battery cells transferred by the first transfer device; and a second transfer device configured to transfer the cell assembly assembled by the aligning device toward a structure assembling device for assembly with a side structure unit that covers the battery cells.

More preferably, the first transfer device may include an upper conveyor configured to transfer the two rows of battery cells; and a lower conveyor configured to guide the two rows of battery cells to the aligning device

More preferably, the first transfer device may include a lift unit configured to be movable up and down between the upper conveyor and the lower conveyor and transfer the two rows of battery cells of the upper conveyor to the lower conveyor.

The aligning device mutually bonds the cooling unit between the two rows of battery cells to form the cell assembly.

More preferably, the second transfer device may be provided to be movable along the ceiling of the assembling system for a battery module assembly.

More preferably, the second transfer device may cure the cell assembly at room temperature during the transfer.

More preferably, the second transfer device may lift and transfer the cell assembly without changing a direction of the cell assembly.

More preferably, the assembling system for a battery module assembly may further comprise the structure assembling device configured to form the battery module assembly by arranging a plurality of side structure units between the battery cells of at least one cell assembly transferred by the second transfer device.

More preferably, the structure assembling device may mutually bond the plurality of side structure units and the at least one cell assembly.

In the present invention, there is also provided an assembling method for a battery module assembly, comprising: transferring a plurality of battery cells in two rows; assembling a cell assembly by aligning a cooling unit between the battery cells transferred in two rows; transferring the cell assembly toward a side structure unit that covers the battery cells of the cell assembly; and assembling the battery module assembly by covering the battery cells of the cell assembly with the side structure unit.

More preferably, said transferring of a plurality of battery cells in two rows may include transferring the two rows of battery cells through an upper conveyor; and transferring the two rows of battery cells of the upper conveyor to a lower conveyor for assembling the cell assembly.

More preferably, the cell assembly may be formed by mutually bonding the cooling unit arranged between the two rows of battery cells with the two rows of battery cells through an adhesive.

More preferably, the battery module assembly may be formed by mutually bonding the battery cells of the cell assembly with the side structure unit through an adhesive.

More preferably, the cell assembly may be cured at room temperature when transferred toward the side structure unit.

More preferably, when transferred toward the side structure unit, the cell assembly may be transferred toward the side structure unit along the ceiling.

### Advantageous Effects

According to various embodiments as described above, it is possible to provide an assembling system and method for a battery module assembly, which may implement a frameless structure.

In addition, according to various embodiments as described above, it is possible to provide an assembling system and method for a battery module assembly, which may reduce manufacturing cost and minimizing an assembly space.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining an assembling system for a battery module assembly according to an embodiment of the present disclosure.
FIG. 2 is a schematic diagram for explaining an aligning device of the assembling system for a battery module assembly of FIG. 1.
FIG. 3 is a diagram for explaining the main part of the aligning device of FIG. 2.
FIG. 4 is a schematic cross-sectional view of the aligning device of FIG. 2.
FIG. 5 is a schematic diagram for explaining a structure assembling device of the assembling system for a battery module assembly of FIG. 1.
FIG. 6 is a schematic diagram for explaining a pre-working device of the assembling system for a battery module assembly of FIG. 1.
FIGS. 7 and 8 are diagrams for explaining the operation of a first transfer device of the assembling system for a battery module assembly of FIG. 1.
FIGS. 9 to 13 are diagrams for explaining the operation of the aligning device of the assembling system for a battery module assembly of FIG. 1.
FIGS. 14 to 16 are diagrams for explaining the operation of an aligning device according to another embodiment of the assembling system for a battery module assembly of FIG. 1.
FIGS. 17 and 18 are diagrams for explaining the operation of a second transfer device of the assembling system for a battery module assembly of FIG. 1.
FIGS. 19 to 23 are diagrams for explaining the pre-processing operation of a cooling unit through the pre-working device of the assembling system for a battery module assembly of FIG. 1.
FIGS. 24 to 26 are diagrams for explaining the pre-processing operation of a side structure unit through the pre-working device of the assembling system for a battery module assembly of FIG. 1.
FIGS. 27 to 29 are diagrams for explaining the operation of a structure assembling device of the assembling system for a battery module assembly of FIG. 1.
FIG. 30 is a diagram for explaining a battery module assembly assembled through the assembling system for a battery module assembly of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

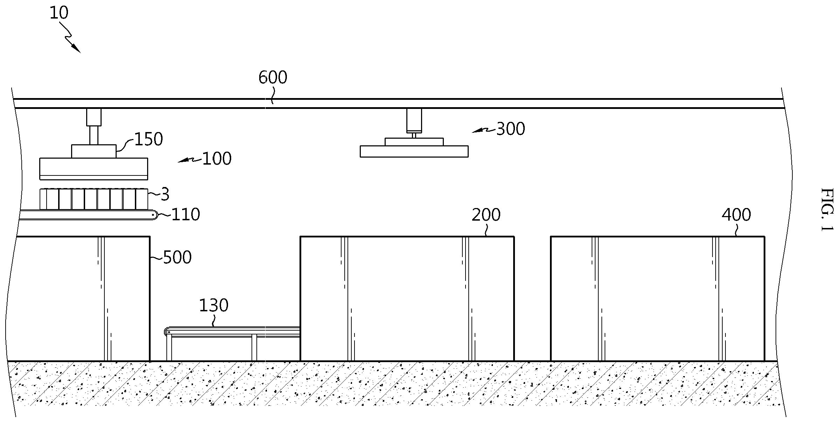

FIG. 1 is a diagram for explaining an assembling system for a battery module assembly according to an embodiment of the present disclosure.

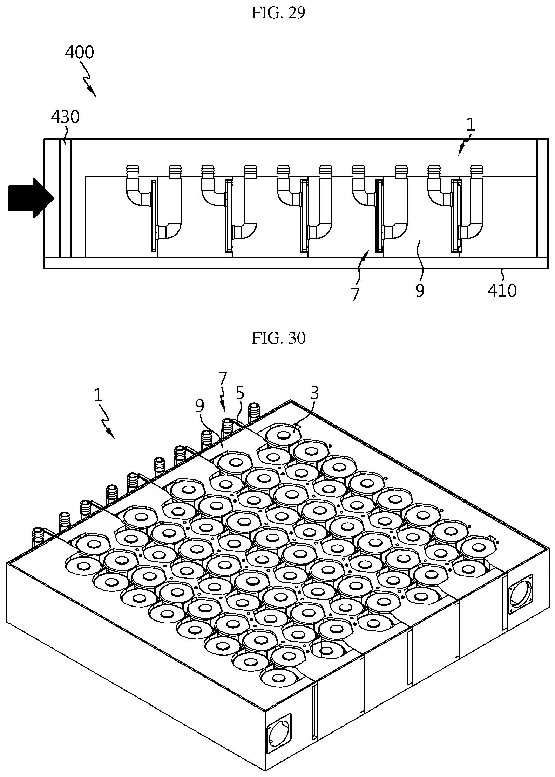

Referring to FIG. 1, the assembling system 10 for a battery module assembly (1, see FIG. 30) includes a first transfer device 100, an aligning device 200, and a second transfer device 300.

The first transfer device 100 transfers a plurality of battery cells 3 in two rows. The first transfer device 100 may guide the plurality of battery cells 3 toward the aligning device 200 to be described later.

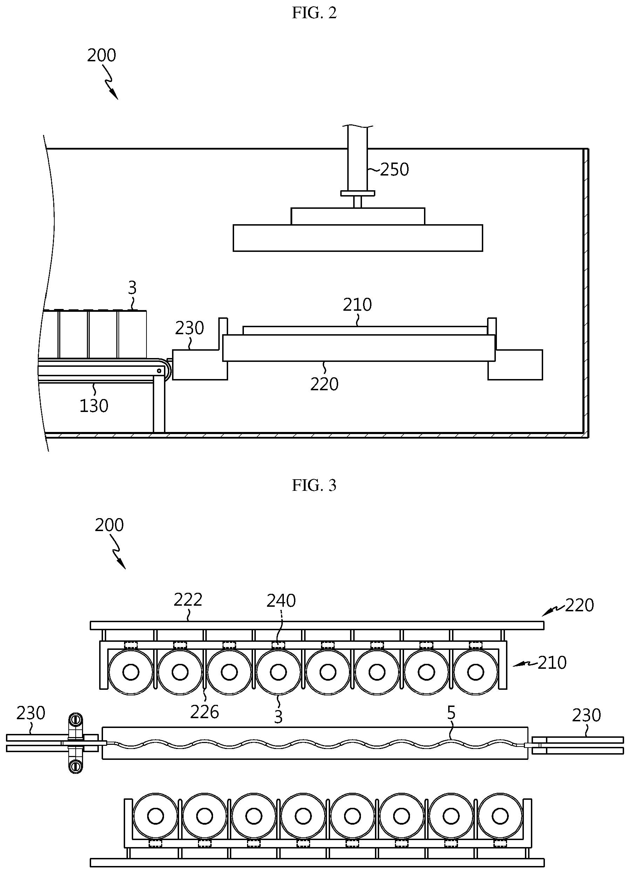

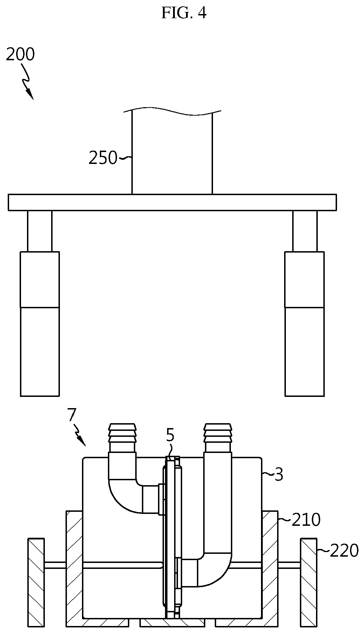

The aligning device 200 assembles a cell assembly (7, see FIG. 4) by aligning a cooling unit (5, see FIG. 3) between two rows of battery cells 3 transferred by the first transfer device 100. The cell assembly 7 is formed of the battery cells 3 and the cooling unit 5.

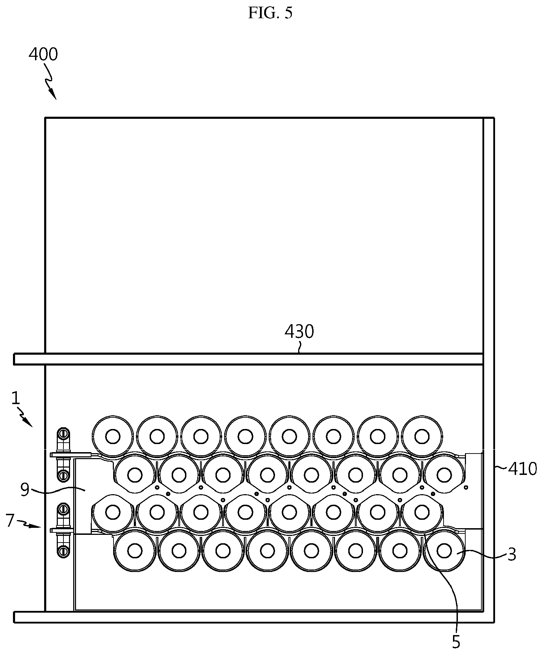

The second transfer device 300 transfers the cell assembly 7 assembled by the aligning device 200 toward the structure assembling device 400 for assembly with a side structure unit (9, see FIG. 5) that covers the battery cells 3. The structure assembling device 400 described later assembles the cell assembly 7 transferred by the second transfer device 300 with the side structure unit 9 to manufacture a battery module assembly (1, see FIG. 30).

Through the assembling system 10 as described above, the battery module assembly (1, see FIG. 30) provided with a cell assembly 7 formed of the battery cells 3 and the cooling unit 5 and a side structure unit 9 assembled with the cell assembly 7 is implemented.

In this embodiment, the battery module assembly 1 fixes and supports the cell assembly 7 only by the side structure unit 9, and thus it is possible to omit a conventional frame structure provided as an assembly of a plurality of plate structures such as an upper plate, a lower plate, a front plate, a rear plate, and a side plate. That is, the battery module assembly 1 according to this embodiment may be provided to have a frameless structure.

The battery module assembly 1 is provided in one or in plurality, and by adding a component for electrical connection, etc., a battery pack may be configured and mounted on a vehicle such as an automobile or a mechanism or structure such as an energy storage system.

In this way, by assembling the battery module assembly 1 of a frameless structure, the assembling system 10 according to this embodiment may reduce manufacturing cost and simplify the assembly process compared to the conventional cell frame structure, thereby significantly improving cost competitiveness and manufacturing efficiency.

In addition, by forming the battery module assembly 1 of a frameless structure, the assembling system 10 according to this embodiment may secure high energy density while realizing a slimmer and more compact structure compared to a conventional cell frame structure.

Hereinafter, the assembling system 10 according to this embodiment will be described in more detail.

The first transfer device 100 may include an upper conveyor 110 and a lower conveyor 130.

The upper conveyor 110 may transfer the two rows of battery cells 3. To this end, two rows of conveyor belt lines for transferring the two rows of battery cells 3 may be provided in the upper conveyor 110.

The lower conveyor 130 may guide the two rows of battery cells 3 to the aligning device 200. To this end, two rows of conveyor belt lines for transferring the two rows of battery cells 3 may be provided in the lower conveyor 130.

The lower conveyor 130 may be disposed below the upper conveyor 110 at a predetermined distance from the upper conveyor 110.

In this embodiment, through the first transfer device 100 including the upper conveyor 110 and the lower conveyor 130, which are divisionally arranged vertically, the entire conveyor line may be reduced compared to a structure in which a straight conveyor is arranged long.

Therefore, in this embodiment, the assembly space may be minimized by reducing the length of the entire assembly line through the first transfer device 100. Accordingly, in this embodiment, it is possible to optimize the entire assembly space as well as to reduce the construction cost for constructing the assembling system 10.

The first transfer device 100 may include a lift unit 150.

The lift unit 150 may move up and down between the upper conveyor 110 and the lower conveyor 130, and may transfer the two rows of battery cells 3 of the upper conveyor 110 to the lower conveyor 130.

The lift unit 150 may be provided to be slidable along a ceiling rail 600 provided on the ceiling of the assembling system 10. Accordingly, the lift unit 150 may be movable in both horizontal and vertical directions within the assembling system 10.

The aligning device 200 is provided in the assembling system 10 of the battery module assembly (1, see FIG. 30), and assembles two rows of battery cells 3 and the cooling unit 5 to form a cell assembly.

Specifically, the aligning device 200 forms the cell assembly 7 by mutually bonding the cooling unit 5 between the two rows of battery cells 3. The cell assembly 7 is provided as an assembly of the battery cells 3 and the cooling unit 5 through the aligning device 200.

Hereinafter, the aligning device 200 according to this embodiment will be described in more detail.

FIG. 2 is a schematic diagram for explaining an aligning device of the assembling system for a battery module assembly of FIG. 1, FIG. 3 is a diagram for explaining the main part of the aligning device of FIG. 2, and FIG. 4 is a schematic cross-sectional view of the aligning device of FIG. 2.

Referring to FIGS. 2 to 4 and FIG. 1 above, the aligning device 200 may include a guide jig 210, a cell spacing adjusting jig 220, and a cooling unit gripper 230.

The guide jig 210 is for supporting the two rows of battery cells 3 and may be provided as a pair. The pair of guide jigs 210 may be provided to support the battery cells 3 of each row.

The cell spacing adjusting jig 220 is connected to the pair of guide jigs 210 and may adjust the spacing of battery cells 3 in each row. The cell spacing adjusting jig 220 is provided as a pair and may be slidably mounted on each guide jig 210.

The cooling unit gripper 230 may place the cooling unit 5 between the pair of guide jigs 210. The cooling unit grippers 230 are provided as a pair and may support both ends of the cooling unit 5.

The aligning device 200 according to this embodiment may adjust the spacing of the two rows of battery cells 3 by the sliding of the guide jig 210 and the cell spacing adjusting jig 220 in a state in which the two rows of battery cells 3 are placed in a standing state with the cooling unit 5 interposed therebetween.

Specifically, the pair of guide jigs 210 may be provided to be slidable along a direction toward the cooling unit gripper 230 and a direction opposite to the cooling unit gripper 226. That is, the pair of guide jigs 210 may be provided to be slidable along a direction toward the cooling unit 5 and a direction opposite to the cooling unit 5 while supporting the battery cells 3 in each row.

Here, the pair of guide jigs 210 may pressurize the battery cells 3 of each row through the sliding operation to bring the battery cells 3 of each row into close contact with both side surfaces of the cooling unit 5.

The cell spacing adjusting jig 220 is provided as a pair and is slidably mounted on one side of the pair of guide jigs 210, and at least a part thereof may penetrate the pair of guide jigs 210 during the sliding to adjust the spacing of the battery cells 3 in each row while sliding between the battery cells 3 of each row.

The pair of cell spacing adjusting jigs 220 may include an adjusting jig body 222 and a spacing adjusting portion 226, respectively.

The adjusting jig body 222 may be slidably mounted on one side of each guide jig 210. The adjusting jig body 222 may be disposed to face the battery cells 3 with the guide jig 210 interposed therebetween.

The spacing adjusting portion 226 is provided in plurality and protrudes from the adjusting jig body 222 to a predetermined length, and during the sliding, the spacing adjusting portion 226 may penetrate each guide jig 210 and slide between the battery cells 3 in each row to widen the spacing between the battery cells 3 in each row at a predetermined interval.

The plurality of spacing adjusting portions 226 may be spaced apart from each other by a predetermined distance at equal intervals along the longitudinal direction of the adjusting jig body 222. Accordingly, according to the sliding operation of the plurality of spacing adjusting portions 226, the spacing between the battery cells 3 in each row may be adjusted at equal intervals.

The aligning device 200 may include a cell support 240.

The cell support 240 is provided on the pair of guide jigs 210 and may support the battery cells 3. The cell support 240 may guide the battery cells 3 seated on the pair of guide jigs 210 to be supported more stably.

The cell support 240 may be provided as a magnetic member. The cell support 240 may be provided in plurality. The plurality of cell supports 240 may be provided at a position facing the battery cells 3 when the battery cells 3 are seated on the guide jig 210.

The aligning device 200 may include an aligning gripper 250.

The aligning gripper 250 is provided on the upper side of the pair of guide jigs 210, and may pressurize and fix the upper end of two rows of battery cells 3 disposed with the cooling unit 5 interposed therebetween.

When assembling the cell assembly 7, the aligning gripper 250 may further increase the coupling solidity in the upper part of the battery cells 3 and the cooling unit 5.

In addition, the aligning gripper 250 may guide a subsequent transfer process of the cell assembly 7 provided with the battery cells 3 and the cooling unit 5.

The aligning device 200 may form the cell assembly 7 by mutually aligning and bonding the cooling unit 5 between the two rows of battery cells 3.

Referring back to FIG. 1, the second transfer device 300 may be provided to be movable along the ceiling of the assembling system 10 of the battery module assembly (1, see FIG. 30).

Specifically, like the lift unit 150 of the first transfer device 100, the second transfer device 300 may be slidably mounted on the ceiling rail 600. In addition, like the lift unit 150 of the first transfer device 100, the second transfer device 300 may be provided to be movable up and down in a vertical direction.

Meanwhile, the second transfer device 300 may also be integrated with the lift unit 150. That is, the second transfer device 300 and the lift unit 150 of the first transfer device 100 may be provided as one lifting body.

The second transfer device 300 may cure the cell assembly 7 at room temperature during the transfer. To this end, the second transfer device 300 may be provided with components for curing the cell assembly 7 at room temperature.

In this embodiment, the curing process of the cell assembly 7 may be performed during the transfer of the second transfer device 300 provided on the ceiling rail 600, so it is possible to save space in the curing process and further shorten the assembly process time by reducing the takt time of the assembly process.

During the transfer, the second transfer device 300 may lift and transfer the cell assembly 7 from the aligning device 200 without changing the direction of the cell assembly 7. Accordingly, in this embodiment, during the transfer, a rotation process for adjusting the insertion direction of the battery cells 3 of the cell assembly 7 is not separately required, so the process efficiency may be further increased.

The structure assembling device 400 may form the battery module assembly 1 by arranging a plurality of side structure units 9 between the battery cells 3 of at least one cell assembly 7 transferred by the second transfer device 300.

Specifically, the structure assembling device 400 may form the battery module assembly 1 by bonding the plurality of side structure units 9 and the at least one cell assembly 7 to each other.

The battery module assembly 1 provided with the battery cells 3, the cooling unit 5, and the side structure units 9 is assembled through the structure assembling device 400.

Hereinafter, the structure assembling device 400 will be described in more detail.

FIG. 5 is a schematic diagram for explaining a structure assembling device of the assembling system for a battery module assembly of FIG. 1.

Referring to FIG. 5 and FIG. 1 above, the structure assembling device 400 may include an assembling base 410 and a sliding jig 430.

The assembling base 410 may guide alignment of the at least one cell assembly 7 and the at least one side structure unit 9 to form the battery module assembly 1.

The sliding jig 430 is slidably provided on the assembling base 410 and may bring the at least one cell assembly 7 and the at least one side structure unit 9 into close contact with each other through the sliding.

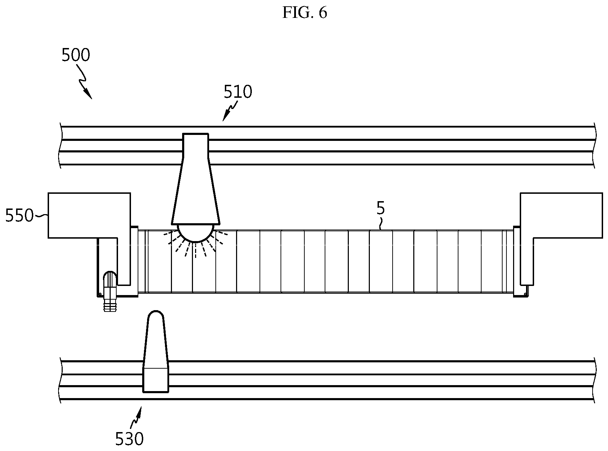

FIG. 6 is a schematic diagram for explaining a pre-working device of the assembling system for a battery module assembly of FIG. 1.

Referring to FIG. 6 and FIG. 1 above, prior to the assembly process of the cell assembly 7 through the aligning device 200 and the assembly process of the battery module assembly 1 through the structure assembling device 400, the pre-working device 500 may perform the preprocessing process of the cooling unit 5 and the side structure unit 9.

The pre-working device 500 may include a plasma processing unit 510, an adhesive processing unit 530, and a direction changing unit 550.

The plasma processing unit 510 is for treating plasma P toward the cooling unit 5, and may be slidably provided along the longitudinal direction of the cooling unit 5.

The adhesive processing unit 530 is for applying adhesive G to the cooling unit 5 and the side structure unit 9, and may be slidably provided along the longitudinal direction of the cooling unit 5 and the side structure unit 9.

The direction changing unit 550 may guide the treatment of the plasma P and the application of the adhesive G and support the cooling unit 5 or the side structure unit 9 during the treatment of the plasma P or the application of the adhesive G.

The direction changing unit 550 may change the direction of the cooling unit 5 or the side structure unit 9 so that the treatment of the plasma P or the application of the adhesive G may be performed to both side surfaces of the cooling unit 5 or the side structure unit 9.

Meanwhile, the assembling system 10 may include the ceiling rail 600.

Referring back to FIG. 1, the ceiling rail 600 is provided on the ceiling of the assembling system 10 and may guide the sliding operation of the lift unit 150 of the first transfer device 100 and the second transfer device 300.

In the assembling system 10 according to this embodiment, since the ceiling rail 600 is provided on the ceiling of the system to guide the transfer, etc., space utilization of the entire system may be maximized and space for system equipment construction may be saved.

Hereinafter, the assembly process of the battery module assembly 1 through the assembling system 10 of the battery module assembly 1 according to this embodiment will be described in more detail.

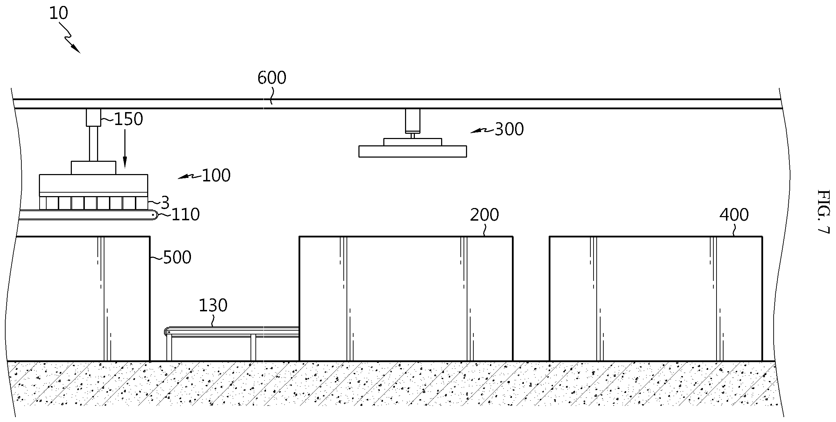

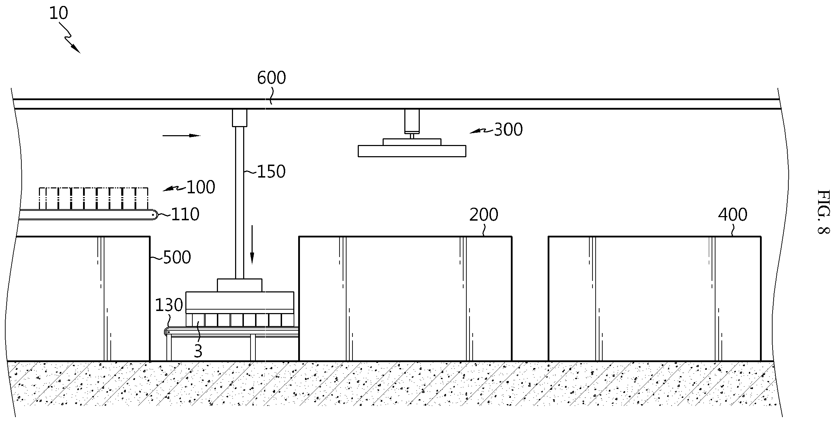

FIGS. 7 and 8 are diagrams for explaining the operation of a first transfer device of the assembling system for a battery module assembly of FIG. 1.

Referring to FIGS. 7 and 8, the lift unit 150 of the first transfer device 100 may transfer the two rows of battery cells 3 on the first conveyor 110 toward the second conveyor 130.

Here, the lift unit 150 may lift the two rows of battery cells 3 on the first conveyor 110 through adsorption, etc., move them along the ceiling rail 600 toward the second conveyor 130 by a predetermined distance, and then descend to place them on the second conveyor 130.

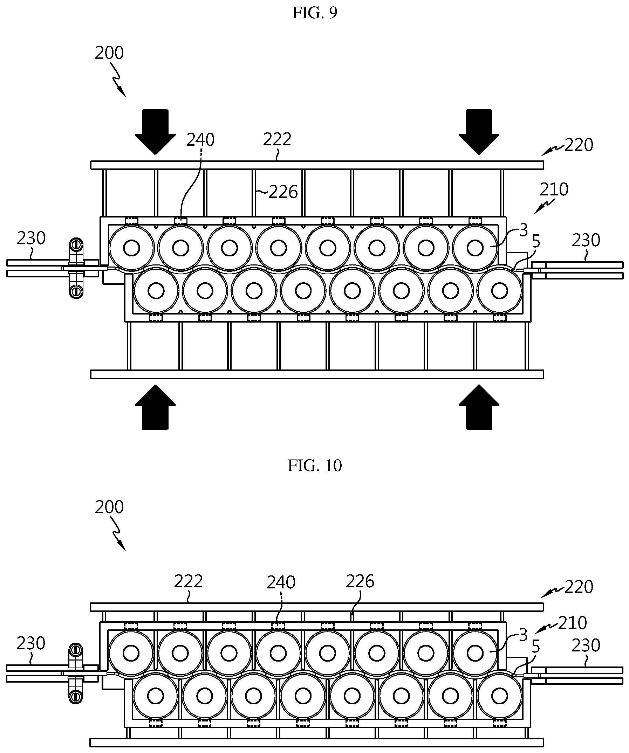

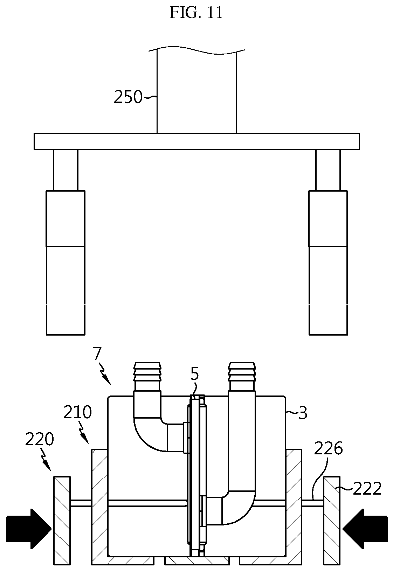

FIGS. 9 to 13 are diagrams for explaining the operation of the aligning device of the assembling system for a battery module assembly of FIG. 1.

Referring to FIGS. 9 to 13, the aligning device 200 may arrange the cooling unit 5 between the two rows of battery cells 3 transferred from the first transfer device 100 to bring the two rows of battery cells 3 and the cooling unit 5 into close contact, thereby forming the cell assembly 7.

Specifically, referring to FIGS. 9 to 11, the pair of guide jigs 210 may pressurize the battery cells 3 of each row to come into close contact with the cooling unit 5. Here, the pair of cell spacing adjusting jigs 220 may adjust the spacing between the battery cells 3 in each row while sliding through the guide jig 210.

Since the adhesive G is applied to both side surfaces of the cooling unit 5 through the pre-working device 500, the battery cells 3 and the cooling unit 5 may be bonded to each other when they are in close contact. The cell assembly 7 may be formed by mutually bonding the battery cells 3 and the cooling unit 5.

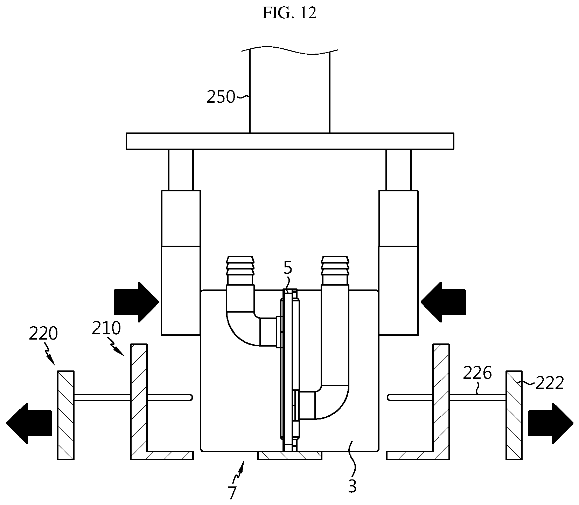

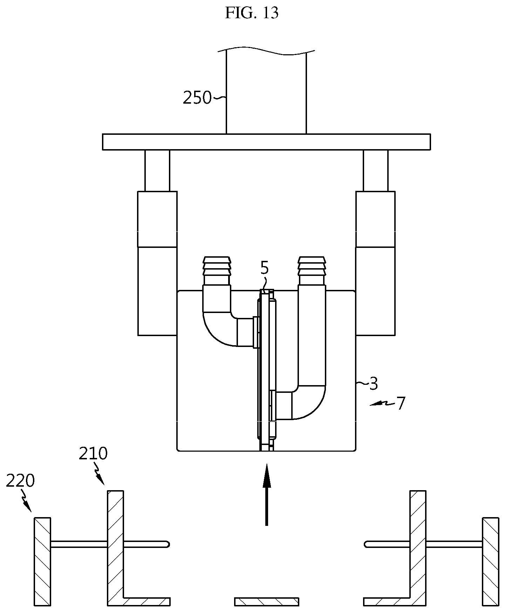

Referring to FIGS. 12 and 13, the pair of guide jigs 210 may slide in a direction away from the cell assembly 7, and the aligning gripper 250 may press both sides of the upper end of the cell assembly 7. Accordingly, the coupling strength between the battery cells 3 and the cooling unit 5 at the upper end of the cell assembly 7 may be further increased. Then, the aligning gripper 250 may lift the cell assembly 7 and guide the cell assembly 7 to a subsequent process.

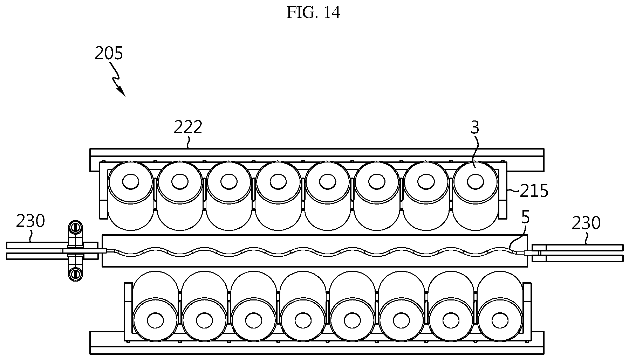

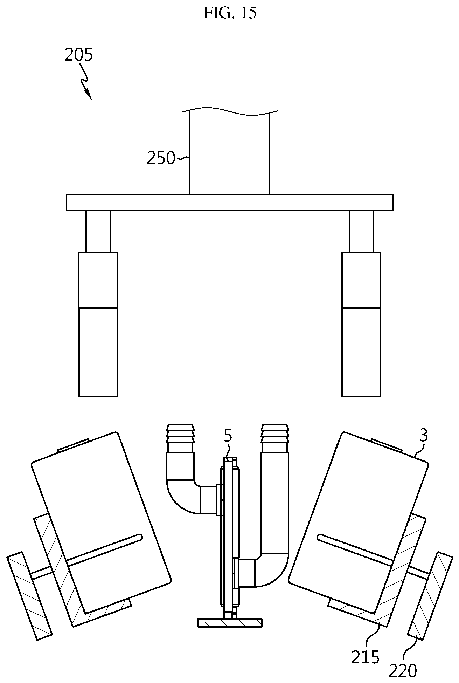

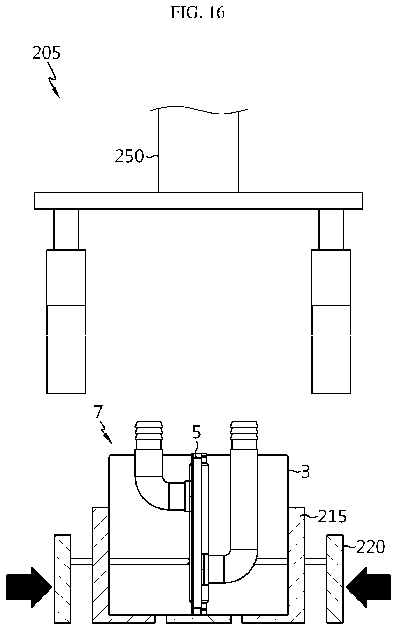

FIGS. 14 to 16 are diagrams for explaining the operation of an aligning device according to another embodiment of the assembling system for a battery module assembly of FIG. 1.

Since the aligning device 200 according to this embodiment is similar to the aligning device 205 of the previous embodiment, redundant description of components identical as or similar to those of the previous embodiment will be omitted, and hereinafter, the focus will be on differences from the previous embodiment.

Referring to FIGS. 14 to 16, the aligning device 205 may include a pair of guide jigs 215 provided to be tiltable at a predetermined angle with the cooling unit gripper 230 interposed therebetween.

The pair of guide jigs 215 may be arranged to be inclined at a predetermined angle before the two rows of battery cells 3 and the cooling unit 5 come into close contact, so that the battery cells 3 in each row may be more stably supported.

Since the pair of guide jigs 215 are tilted at the predetermined angle, it is possible to press the battery cells 3 of each row to come into close contact with the cooling unit 5.

As such, since the pair of guide jigs 215 are provided to implement both sliding and tilting operations, the two rows of battery cells 3 may be more stably supported during the alignment or pressing operation.

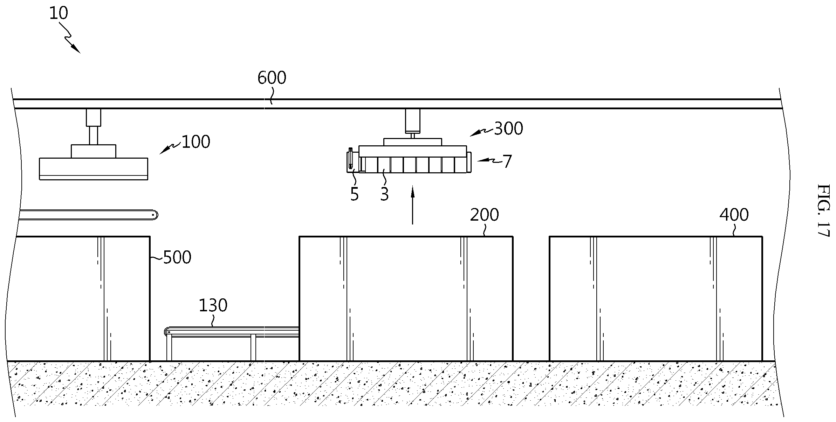

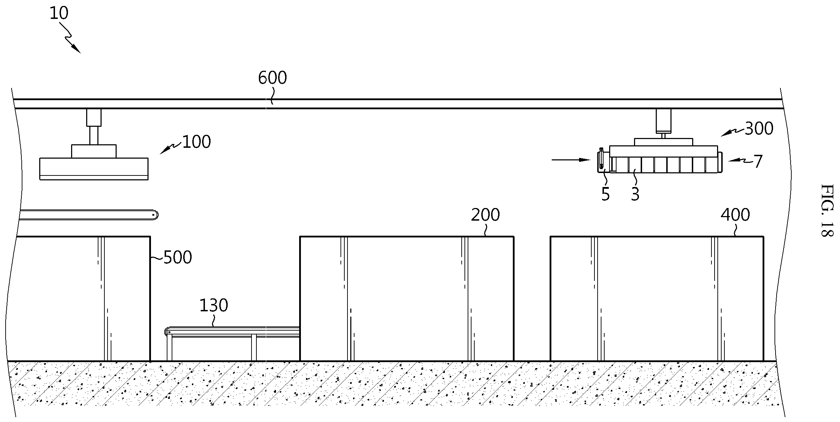

FIGS. 17 and 18 are diagrams for explaining the operation of a second transfer device of the assembling system for a battery module assembly of FIG. 1.

Referring to FIGS. 17 and 18, the second transfer device 300 may lift the cell assembly 7 from the aligning device 200 and transfer it toward the structure assembling device 400.

During such a transfer operation, the second transfer device 300 may cure the cell assembly 7 at room temperature to further increase the bonding strength of the cell assembly 7. As such, in this embodiment, during the transfer of the second transfer device 300, the cell assembly 7 may be cured, so that assembly fixation efficiency may be further improved.

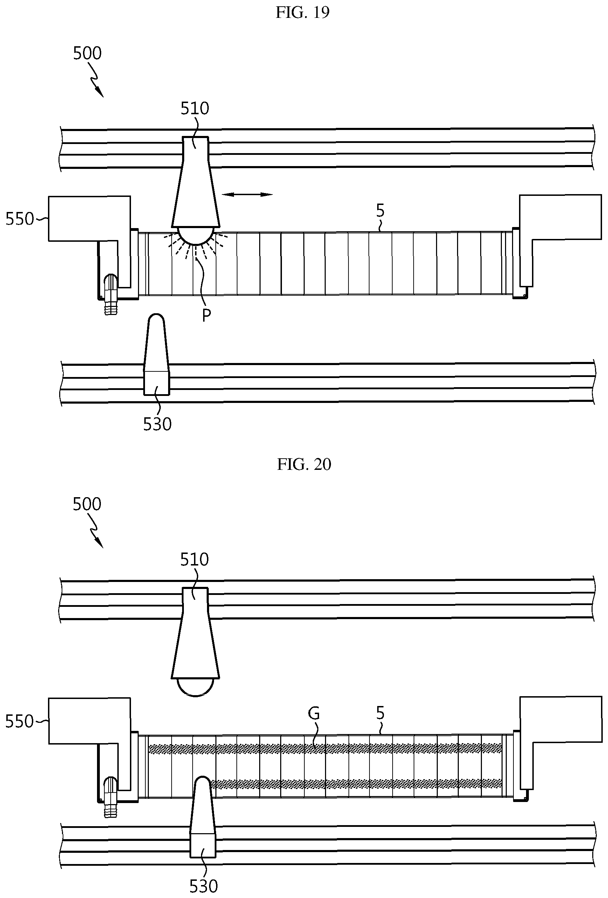

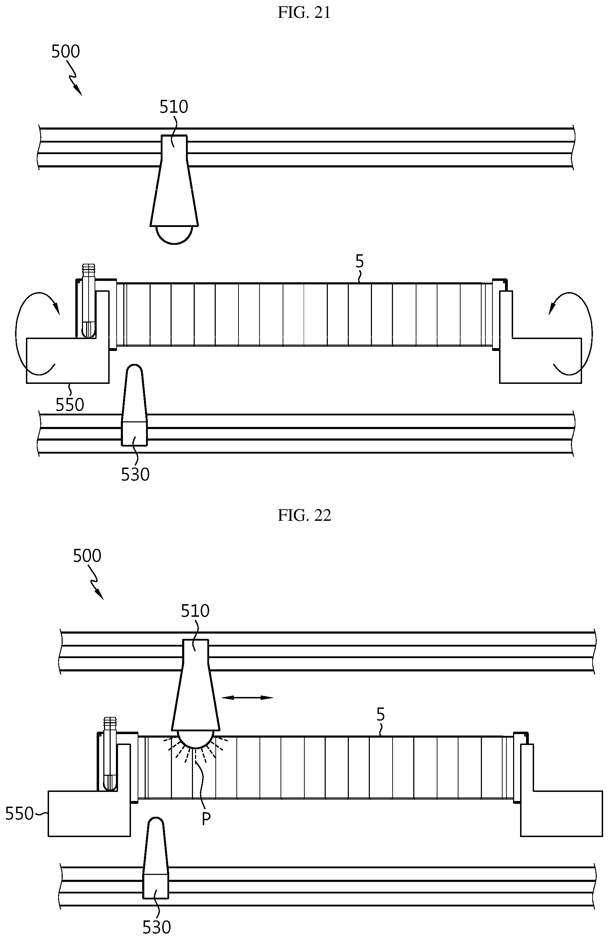

FIGS. 19 to 23 are diagrams for explaining the pre-processing operation of a cooling unit through the pre-working device of the assembling system for a battery module assembly of FIG. 1.

Referring to FIGS. 19 to 23, the pre-working device 500 may perform a preprocessing process before transferring the cooling unit 5 toward the aligning device 200.

First, the plasma processing unit 510 of the pre-working device 500 may treat plasma P on one side surface of both side surfaces of the cooling unit 5 while sliding along the longitudinal direction of the cooling unit 5.

Thereafter, the adhesive processing unit 530 of the pre-working device 500 may apply the adhesive G to one side surface of both side surfaces of the cooling unit 5 while sliding along the longitudinal direction of the cooling unit 5.

When the treatment of the plasma P and the application of the adhesive G are completed on one side surface of both side surfaces of the cooling unit 5, the direction changing unit 550 may change the direction of the cooling unit 5.

Thereafter, the plasma processing unit 510 of the pre-working device 500 may treat plasma P on the other side surface of both side surfaces of the cooling unit 5 while sliding along the longitudinal direction of the cooling unit 5.

In addition, the adhesive processing unit 530 of the pre-working device 500 may apply the adhesive G to the other side surface of both side surfaces of the cooling unit 5 while sliding along the longitudinal direction of the cooling unit 5.

Thereafter, the pre-working device 500 may transfer the cooling unit 5, where the treatment of the plasma P and the application of the adhesive G are performed on both side surfaces, toward the aligning device 200.

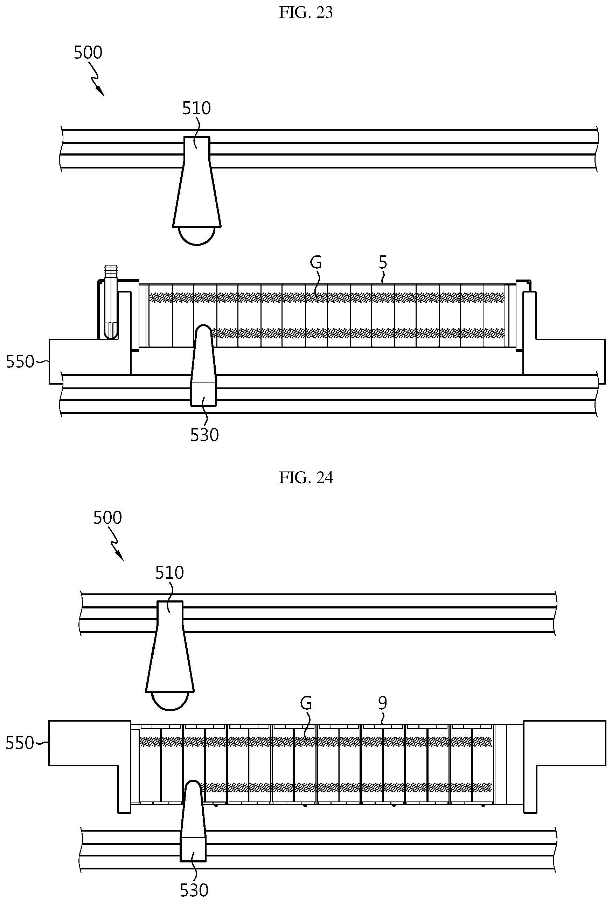

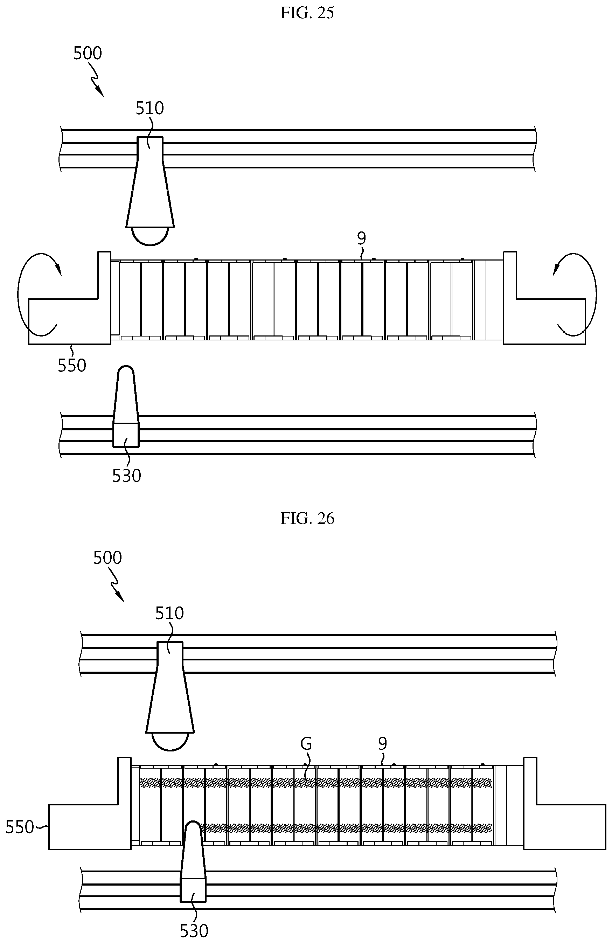

FIGS. 24 to 26 are diagrams for explaining the pre-processing operation of a side structure unit through the pre-working device of the assembling system for a battery module assembly of FIG. 1.

Referring to FIGS. 24 to 26, the pre-working device 500 may perform a preprocessing process before transferring the side structure unit 9 toward the structure assembling device 400.

First, the adhesive processing unit 530 of the pre-working device 500 may apply the adhesive G to one side surface of both side surfaces of the side structure unit 9 while sliding along the longitudinal direction of the side structure unit 9.

When the application of the adhesive G is completed on one side surface of both side surfaces of the side structure unit 9, the direction changing unit 550 may change the direction of the side structure unit 9.

Thereafter, the adhesive processing unit 530 of the pre-working device 500 may apply the adhesive G to the other side surface of both side surfaces of the side structure unit 9 while sliding along the longitudinal direction of the side structure unit 9.

Thereafter, the pre-working device 500 may transfer the side structure unit 9, where the adhesive G is applied to both side surfaces, toward the structure assembling device 400.

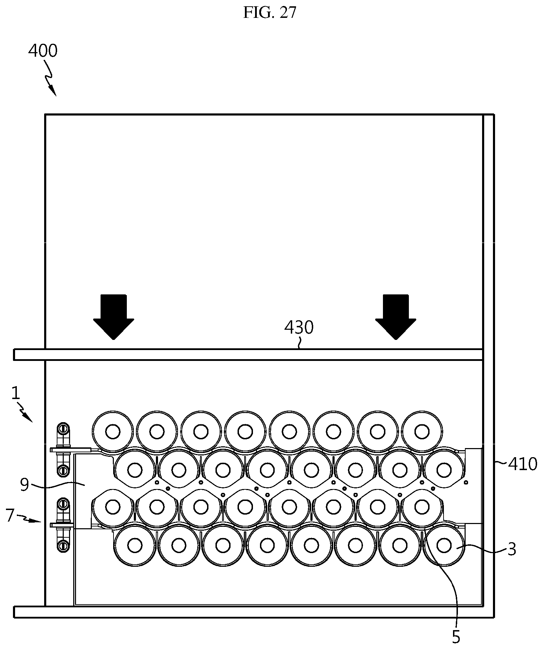

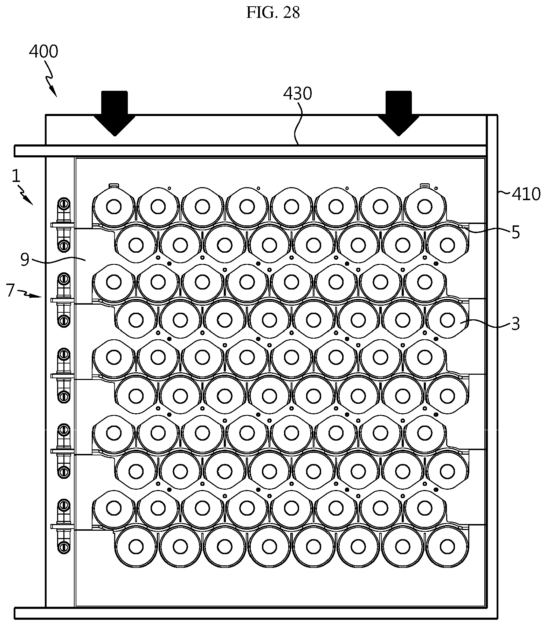

FIGS. 27 to 29 are diagrams for explaining the operation of a structure assembling device of the assembling system for a battery module assembly of FIG. 1.

Referring to FIGS. 27 to 29, the assembling base 410 of the structure assembling device 400 may arrange the side structure unit 9 and the cell assembly 7 to be alternately disposed.

The sliding jig 430 may bring the side structure units 9 into close contact with the cell assembly 7 while sliding along the assembling base 410. Accordingly, the side structure unit 9 and the cell assembly 7 may be bonded to each other while closely contacting each other to form the battery module assembly 1.

Hereinafter, a method of assembling the battery module assembly 1 of the present disclosure through the assembly process through the assembling system 10 will be described in detail.

The assembly method of the battery module assembly (1, see FIG. 30) includes the steps of transferring a plurality of battery cells 3 in two rows, arranging a cooling unit 5 between the battery cells 3 transferred in two rows to assemble a cell assembly 7, transferring the cell assembly 7 toward the side structure unit 9 that covers the battery cells 3 of the cell assembly 7, and covering the battery cells 3 of the cell assembly 7 with the side structure unit 9 to assemble the battery module assembly 1.

Here, the step of transferring the plurality of battery cells 3 in two rows includes the steps of transferring the two rows of battery cells 3 through the upper conveyor 110 and transferring the two rows of battery cells 3 of the upper conveyor 110 to the lower conveyor 130 for assembling the cell assembly 7.

Here, the cell assembly 7 may be formed by mutually bonding the cooling unit 5 aligned between the two rows of battery cells 3 to the two rows of battery cells 3 through adhesive G.

In addition, the battery module assembly 1 may be formed by mutually bonding the battery cells 3 of the cell assembly 7 and the side structure unit 9 through adhesive G.

Meanwhile, the cell assembly 7 may be cured at room temperature when transferred to the side structure unit 9. Accordingly, the battery cells 3 and the cooling unit 5 of the cell assembly 7 may be more firmly coupled to each other prior to being assembled with the side structure unit 9. In addition, when the cell assembly is transferred toward the side structure unit 9, it may be transferred toward the side structure unit 9 along the ceiling.

FIG. 30 is a diagram for explaining a battery module assembly assembled through the assembling system for a battery module assembly of FIG. 1.

Referring to FIG. 30, the battery module assembly 1 according to this embodiment may include a plurality of cell assembly 7 having a cooling unit 5 between the battery cells 3, and a plurality of side structure units 9 provided between the plurality of cell assemblies 7 and forming both outermost side surfaces of the battery module assembly 1.

Since the battery module assembly 1 is formed only of the plurality of cell assemblies 7 and the plurality of side structure units 9, a frameless structure may be implemented without the same conventional frame structure.

Since the battery module assembly 1 manufactured through the assembling system 10 according to this embodiment is provided as a frameless structure, it may be slimmer than a conventional frame structure and may secure a relatively high energy density.

The present disclosure is directed to providing an assembling system 10 and method for a battery module assembly 1, which may implement a frameless structure.

In addition, the present disclosure is directed to providing an assembling system 10 and method for a battery module assembly 1, which may reduce manufacturing cost and minimizing an assembly space.

The present disclosure has been described in detail.

## Claims

1. An assembling system (10) for a battery module assembly (1) provided with a cell assembly (7) formed of battery cells (3) and a cooling unit (5) and side structure units (9) assembled with the cell assembly (7), comprising:
a first transfer device (100) configured to transfer a plurality of the battery cells (3) in two rows;
an aligning device (200) configured to assemble the cell assembly (7) by aligning the cooling unit (5) between the two rows of battery cells (3) transferred by the first transfer device (100); and
a second transfer device (300) configured to transfer the cell assembly (7) assembled by the aligning device (200) toward a structure assembling device (400) for assembly with a plurality of the side structure units (9) that covers the battery cells (3),
wherein the structure assembling device (400) is configured to assemble the cell assembly (7) with the plurality of the side structure units (9) to manufacture a battery module assembly (1), and
wherein the aligning device (200) mutually bonds the cooling unit (5) between the two rows of battery cells (3) to form the cell assembly (7).

2. The assembling system (10) according to claim 1, wherein the first transfer device (100) includes:
an upper conveyor (110) configured to transfer the two rows of battery cells (3); and
a lower conveyor (130) configured to guide the two rows of battery cells (3) to the aligning device (200).

3. The assembling system (10) according to claim 2, wherein the first transfer device (110) includes a lift unit (150) configured to be movable up and down between the upper conveyor (110) and the lower conveyor (130) and transfer the two rows of battery cells (3) of the upper conveyor (110) to the lower conveyor (130).

4. The assembling system (10) according to claim 1, wherein the second transfer device (300) is provided to be movable along the ceiling of the assembling system (10) for a battery module assembly (1).

5. The assembling system (10) according to claim 1, wherein an adhesive is used for the mutual bonding, wherein the second transfer device (300) cures the cell assembly (7) at room temperature during the transfer by the second transfer device (300).

6. The assembling system (10) according to claim 1, wherein the second transfer device (200) lifts and transfers the cell assembly (7) without changing a direction of the cell assembly (7).

7. The assembling system (10) according to claim 1, wherein the structure assembling device (400) is configured to form the battery module assembly (1) by arranging the plurality of the side structure units (9) between the battery cells (3) of at least one cell assembly (7) transferred by the second transfer device (300).

8. The assembling system (10) according to claim 7, wherein the structure assembling device (400) mutually bonds the plurality of the side structure units (9) and the at least one cell assembly (7).

9. An assembling method for a battery module assembly (1) provided with a cell assembly (7) formed of battery cells (3) and a cooling unit (5) and side structure units (9) assembled with the cell assembly (7), comprising:
transferring a plurality of the battery cells (3) in two rows;
assembling a cell assembly (7) by aligning a cooling unit (5) between the battery cells (3) transferred in two rows;
transferring the cell assembly (7) toward a plurality of the side structure units (9) that cover the battery cells (3) of the cell assembly (7); and
assembling the battery module assembly (1) by covering the battery cells (3) of the cell assembly (7) with the plurality of the side structure units (9).

10. The assembling method according to claim 9, wherein said transferring of the plurality of the battery cells (3) in two rows includes:
transferring the two rows of battery cells (3) through an upper conveyor (110); and
transferring the two rows of battery cells (3) of the upper conveyor (110) to a lower conveyor (130) for assembling the cell assembly (7).

11. The assembling method according to claim 9, wherein the cell assembly (7) is formed by mutually bonding the cooling unit (5) arranged between the two rows of battery cells (3) with the two rows of battery cells (3) through an adhesive.

12. The assembling method according to claim 9, wherein the battery module assembly (1) is formed by mutually bonding the battery cells (3) of the cell assembly (7) with the plurality of the side structure units through an adhesive.

13. The assembling method according to claim 11, wherein the cell assembly (7) is cured at room temperature when transferred toward the plurality of the side structure units (9).

14. The assembling method according to claim 9, wherein when transferred toward the plurality of the side structure units (9), the cell assembly (7) is transferred toward the plurality of the side structure units (9) along the ceiling.

## Patentansprüche

1. Montagesystem (10) für eine Batteriemodulbaugruppe (1), die mit einer Zellenbaugruppe (7), die aus Batteriezellen (3) und einer Kühleinheit (5) gebildet ist, und mit Seitenstruktureinheiten (9), die mit der Zellenbaugruppe (7) montiert sind, versehen ist, umfassend:
eine erste Übertragungsvorrichtung (100), die dazu konfiguriert ist, eine Vielzahl der Batteriezellen (3) in zwei Reihen zu übertragen;
eine Ausrichtungsvorrichtung (200), die dazu konfiguriert ist, die Zellenbaugruppe (7) durch Ausrichten der Kühleinheit (5) zwischen den beiden Reihen von Batteriezellen (3), die von der ersten Übertragungsvorrichtung (100) übertragen wurden, zu montieren; und
eine zweite Übertragungsvorrichtung (300), die dazu konfiguriert ist, die durch die Ausrichtungsvorrichtung (200) montierte Zellenbaugruppe (7) zu einer Strukturmontagevorrichtung (400) zur Montage mit einer Vielzahl der Seitenstruktureinheiten (9), die die Batteriezellen (3) abdeckt, zu übertragen,
wobei die Strukturmontagevorrichtung (400) dazu konfiguriert ist, die Zellenbaugruppe (7) mit der Vielzahl der Seitenstruktureinheiten (9) zu montieren, um eine Batteriemodulbaugruppe (1) herzustellen, und
wobei die Ausrichtungsvorrichtung (200) die Kühleinheit (5) zwischen den beiden Reihen von Batteriezellen (3) gegenseitig verbindet, um die Zellenbaugruppe (7) zu bilden.

2. Montagesystem (10) nach Anspruch 1, wobei die erste Übertragungsvorrichtung (100) Folgendes enthält:
einen oberen Förderer (110), der dazu konfiguriert ist, die beiden Reihen von Batteriezellen (3) zu übertragen; und
einen unteren Förderer (130), der dazu konfiguriert ist, die beiden Reihen von Batteriezellen (3) zu der Ausrichtvorrichtung (200) zu führen.

3. Montagesystem (10) nach Anspruch 2, wobei die erste Übertragungsvorrichtung (110) eine Hebeeinheit (150) enthält, die dazu konfiguriert ist, zwischen dem oberen Förderer (110) und dem unteren Förderer (130) auf und ab beweglich zu sein und die beiden Reihen von Batteriezellen (3) des oberen Förderers (110) zu dem unteren Förderer (130) zu übertragen.

4. Montagesystem (10) nach Anspruch 1, wobei die zweite Übertragungsvorrichtung (300) so vorgesehen ist, dass sie entlang der Decke des Montagesystems (10) für eine Batteriemodulbaugruppe (1) beweglich ist.

5. Montagesystem (10) nach Anspruch 1, wobei für die gegenseitige Verbindung ein Klebstoff verwendet wird, wobei die zweite Übertragungsvorrichtung (300) die Zellenbaugruppe (7) während der Übertragung durch die zweite Übertragungsvorrichtung (300) bei Raumtemperatur härtet.

6. Montagesystem (10) nach Anspruch 1, wobei die zweite Übertragungsvorrichtung (200) die Zellenbaugruppe (7) anhebt und überträgt, ohne eine Richtung der Zellenbaugruppe (7) zu ändern.

7. Montagesystem (10) nach Anspruch 1, wobei die Strukturmontagevorrichtung (400) dazu konfiguriert ist, die Batteriemodulbaugruppe (1) zu bilden, indem die Vielzahl der Seitenstruktureinheiten (9) zwischen den Batteriezellen (3) von mindestens einer Zellenbaugruppe (7), die von der zweiten Übertragungsvorrichtung (300) übertragen wird, angeordnet wird.

8. Montagesystem (10) nach Anspruch 7, wobei die Strukturmontagevorrichtung (400) die Vielzahl der Seitenstruktureinheiten (9) und die mindestens eine Zellenbaugruppe (7) gegenseitig verbindet.

9. Montageverfahren für eine Batteriemodulbaugruppe (1), die mit einer Zellenbaugruppe (7), die aus Batteriezellen (3) und einer Kühleinheit (5) gebildet ist, und mit Seitenstruktureinheiten (9), die mit der Zellenbaugruppe (7) montiert sind, versehen ist, umfassend:
Übertragen einer Vielzahl der Batteriezellen (3) in zwei Reihen;
Montieren einer Zellenbaugruppe (7) durch Ausrichten einer Kühleinheit (5) zwischen den in zwei Reihen übertragenen Batteriezellen (3);
Übertragen der Zellenbaugruppe (7) zu einer Vielzahl der Seitenstruktureinheiten (9), die die Batteriezellen (3) der Zellenbaugruppe (7) abdecken; und
Montieren der Batteriemodulbaugruppe (1) durch Abdecken der Batteriezellen (3) der Zellenbaugruppe (7) mit der Vielzahl der Seitenstruktureinheiten (9).

10. Montageverfahren nach Anspruch 9, wobei das Übertragen der Vielzahl der Batteriezellen (3) in zwei Reihen Folgendes enthält:
Übertragen der beiden Reihen von Batteriezellen (3) durch einen oberen Förderer (110); und
Übertragen der beiden Reihen von Batteriezellen (3) vom oberen Förderer (110) zu einem unteren Förderer (130) zum Montieren der Zellenbaugruppe (7).

11. Montageverfahren nach Anspruch 9, wobei die Zellenbaugruppe (7) gebildet wird, indem die zwischen den beiden Reihen von Batteriezellen (3) angeordnete Kühleinheit (5) mit den beiden Reihen von Batteriezellen (3) durch einen Klebstoff gegenseitig verbunden wird.

12. Montageverfahren nach Anspruch 9, wobei die Batteriemodulbaugruppe (1) gebildet wird, indem die Batteriezellen (3) der Zellenbaugruppe (7) mit der Vielzahl der Seitenstruktureinheiten durch einen Klebstoff gegenseitig verbunden werden.

13. Montageverfahren nach Anspruch 11, wobei die Zellenbaugruppe (7) bei Raumtemperatur gehärtet wird, wenn sie zu der Vielzahl der Seitenstruktureinheiten (9) übertragen wird.

14. Montageverfahren nach Anspruch 9, wobei, wenn sie zu der Vielzahl der Seitenstruktureinheiten (9) übertragen wird, die Zellenbaugruppe (7) entlang der Decke zu der Vielzahl der Seitenstruktureinheiten (9) übertragen wird.

## Revendications

1. Système d'assemblage (10) pour un ensemble de module de batterie (1) pourvu d'un ensemble de cellules (7) formé de cellules de batterie (3) et d'une unité de refroidissement (5) et d'unités de structure latérales (9) assemblées avec l'ensemble de cellules (7), comprenant :
un premier dispositif de transfert (100) configuré pour transférer une pluralité des cellules de batterie (3) en deux rangées ;
un dispositif d'alignement (200) configuré pour assembler l'ensemble de cellules (7) en alignant l'unité de refroidissement (5) entre les deux rangées de cellules de batterie (3) transférées par le premier dispositif de transfert (100) ; et
un second dispositif de transfert (300) configuré pour transférer l'ensemble de cellules (7) assemblé par le dispositif d'alignement (200) vers un dispositif d'assemblage de structure (400) pour un assemblage avec une pluralité des unités de structure latérales (9) qui couvre les cellules de batterie (3),
dans lequel le dispositif d'assemblage de structure (400) est configuré pour assembler l'ensemble de cellules (7) avec la pluralité des unités de structure latérales (9) pour fabriquer un ensemble de module de batterie (1), et
dans lequel le dispositif d'alignement (200) lie mutuellement l'unité de refroidissement (5) entre les deux rangées de cellules de batterie (3) pour former l'ensemble de cellules (7).

2. Système d'assemblage (10) selon la revendication 1, dans lequel le premier dispositif de transfert (100) inclut :
un convoyeur supérieur (110) configuré pour transférer les deux rangées de cellules de batterie (3) ; et
un convoyeur inférieur (130) configuré pour guider les deux rangées de cellules de batterie (3) vers le dispositif d'alignement (200).

3. Système d'assemblage (10) selon la revendication 2, dans lequel le premier dispositif de transfert (110) inclut une unité de levage (150) configurée pour être mobile vers le haut et vers le bas entre le convoyeur supérieur (110) et le convoyeur inférieur (130) et pour transférer les deux rangées de cellules de batterie (3) du convoyeur supérieur (110) vers le convoyeur inférieur (130).

4. Système d'assemblage (10) selon la revendication 1, dans lequel le second dispositif de transfert (300) est prévu pour être mobile le long du plafond du système d'assemblage (10) pour un ensemble de module de batterie (1).

5. Système d'assemblage (10) selon la revendication 1, dans lequel un adhésif est utilisé pour la liaison mutuelle, dans lequel le second dispositif de transfert (300) durcit l'ensemble de cellules (7) à température ambiante pendant le transfert par le second dispositif de transfert (300).

6. Système d'assemblage (10) selon la revendication 1, dans lequel le second dispositif de transfert (200) soulève et transfère l'ensemble de cellules (7) sans changer une direction de l'ensemble de cellules (7).

7. Système d'assemblage (10) selon la revendication 1, dans lequel le dispositif d'assemblage de structure (400) est configuré pour former l'ensemble de module de batterie (1) en agençant la pluralité des unités de structure latérales (9) entre les cellules de batterie (3) d'au moins un ensemble de cellules (7) transféré par le second dispositif de transfert (300).

8. Système d'assemblage (10) selon la revendication 7, dans lequel le dispositif d'assemblage de structure (400) lie mutuellement la pluralité des unités de structure latérales (9) et l'au moins un ensemble de cellules (7).

9. Procédé d'assemblage pour un ensemble de module de batterie (1) pourvu d'un ensemble de cellules (7) formé de cellules de batterie (3) et d'une unité de refroidissement (5) et d'unités de structure latérales (9) assemblées avec l'ensemble de cellules (7), comprenant :
le transfert d'une pluralité des cellules de batterie (3) en deux rangées ;
l'assemblage d'un ensemble de cellules (7) en alignant une unité de refroidissement (5) entre les cellules de batterie (3) transférées en deux rangées ;
le transfert de l'ensemble de cellules (7) vers une pluralité des unités de structure latérales (9) qui couvrent les cellules de batterie (3) de l'ensemble de cellules (7) ; et
l'assemblage de l'ensemble de module de batterie (1) en couvrant les cellules de batterie (3) de l'ensemble de cellules (7) avec la pluralité des unités de structure latérales (9).

10. Procédé d'assemblage selon la revendication 9, dans lequel ledit transfert de la pluralité des cellules de batterie (3) en deux rangées inclut :
le transfert des deux rangées de cellules de batterie (3) à travers un convoyeur supérieur (110) ; et
le transfert des deux rangées de cellules de batterie (3) du convoyeur supérieur (110) à un convoyeur inférieur (130) pour assembler l'ensemble de cellules (7).

11. Procédé d'assemblage selon la revendication 9, dans lequel l'ensemble de cellules (7) est formé en liant mutuellement l'unité de refroidissement (5) agencée entre les deux rangées de cellules de batterie (3) avec les deux rangées de cellules de batterie (3) au moyen d'un adhésif.

12. Procédé d'assemblage selon la revendication 9, dans lequel l'ensemble de module de batterie (1) est formé en liant mutuellement les cellules de batterie (3) de l'ensemble de cellules (7) avec la pluralité des unités de structure latérales au moyen d'un adhésif.

13. Procédé d'assemblage selon la revendication 11, dans lequel l'ensemble de cellules (7) est durci à température ambiante lorsqu'il est transféré vers la pluralité des unités de structure latérales (9).

14. Procédé d'assemblage selon la revendication 9, dans lequel, lorsqu'il est transféré vers la pluralité des unités de structure latérales (9), l'ensemble de cellules (7) est transféré vers la pluralité des unités de structure latérales (9) le long du plafond.
